# EUROPÄISCHE PATENTSCHRIFT

(11) **EP 0 619 354 B1**
(45) Veröffentlichungstag und Bekanntmachung des Hinweises auf die Patenterteilung: **11.06.1997**
(21) Anmeldenummer: 94103754.1
(22) Anmeldetag: 11.03.1994
(51) Int. Cl.: C09J 183/04

(54) **Bindeschicht für Kupplungsbeläge**
Binder layer for clutch linings
Couche de liant pour des garnitures d'embrayages

(30) Priorität: 03.04.1993 DE 4310979
(43) Veröffentlichungstag der Anmeldung: 12.10.1994
(73) Patentinhaber: DIEHL GMBH & CO., 90478 Nürnberg (DE)
(72) Erfinder: Haberland, Norbert, Dr. Dipl.-Chem., D-53881 Euskirchen (DE); Scheffer, Gerhard, D-53945 Blankenheim (DE)

(56) Entgegenhaltungen:
- EP-A- 0 304 676
- EP-A- 0 355 459
- GB-A- 2 191 830

## Beschreibung

Die Erfindung bezieht sich auf eine Bindeschicht für Kupplungsbeläge nach dem Oberbegriff des Anspruches 1.

Aus der DE-A-26 19 536 ist eine Reibungskupplung mit elastischer Zwischenlage bekannt. Ein Scheibenkörper ist mit der elastischen Zwischenlage, wie Gummi, Kunststoff oder dergleichen durch Vulkanisation, Schweißung oder Verkleben beschichtet. Der Kupplungsbelag ist mit der Außenfläche der Zwischenlage in gleicher Weise, also durch Vulkanisation, Schweißung oder Klebung befestigt. Der Scheibenkörper selbst besteht aus einer einfachen Stahlplatte bzw. einer Stahlblechscheibe. Ein hochwertiger, federnder Stahl sowie ein teuerer und schwieriger Einbau von Schraubenfedern in eine Kupplungsscheibe sowie Bolzen zur Befestigung der Reibungsbeläge an der Kupplungsscheibe entfallen. Eine derartige Reibungskupplung ist für geringe Beanspruchungen geeignet. Bei Kraftfahrzeugkupplungen mit hohen Drehmomenten hat es sich gezeigt, daß die elastische Zwischenlage nicht in der Lage ist den Kupplungsbelag sicher mit dem Scheibenkörper zu verbinden.

Aus der DE-C2-38 31 197 ist ein mehrschichtiges Bauelement zur Übertragung einer Reibungskraft, insbesondere für Kupplungen oder Bremsen bekannt. Die Zwischenschicht befestigt eine Reibschicht auf einer Trägerschicht. Die Zwischenschicht besteht aus einer hochreaktiven Elastomer-Haftmischung im wesentlichen aus hydriertem Nitrilkautschuk (HNBR) und/oder einem Fluorelastomer (FPM). Sie ist über ein zusammengesetztes Bindemittel mittels Chemosorption mit den angrenzenden Schichten verbunden. Das Bindemittel liegt auf der Basis von modifizierten Phenolharzen und/oder modifizierten Kresolharzen bzw. Synthesekautschuk und enthält in einer Lösungsmitteldispersion aktive Füllstoffe.

Bei einer derartigen Zwischenschicht liegen in Bezug auf Kupplungen folgende Nachteile vor:

Unzureichende Temperaturbeständigkeit von HNBR und damit eine ungenügende Beständigkeit bei dynamischen Belastungen und Langzeitbelastungen.
Das FPM wirkt aufgrund seiner hohen Dichte von 1,6 negativ auf das Massenträgheitsmoment des Bauelementes.

Aus der GB-A-2 191 830 ist eine Bindeschicht für Kupplungsbeläge bekannt die aus hitzebeständigem Silikonkautschuk besteht.

Schließlich ist aus der EP-A-304 676 ein hitzebeständiger, vernetzter Silikonkautschuk bekannt. Dieser Kautschuk ist vinylgruppenhaltig und peroxidisch vernetzt. Er wird als wärmehärtender Kleber für Glas, Metall und Kunststoff verwendet.

Der Erfindung liegt die Aufgabe zugrunde, eine Bindeschicht für Kupplungsbeläge vorzuschlagen, die eine Standfestigkeit von - 40° C bis + 275 °C aufweist.

Die Erfindung löst diese Aufgabe entsprechend den kennzeichnenden Merkmalen des Anspruches 1.

Vorteilhafte Weiterbildungen der Erfindung sind den Unteransprüchen zu entnehmen.

Erfindungsgemäß ist die aus Silikonelastomer bestehende, sehr dünne Bindeschicht in der Lage, den Reibbelag in dem Temperaturbereich von - 40° C bis + 275°C auf einem geeigneten Trägerkörper zu befestigen. Auch der bis auf eine dünne Schicht abgetragene Reibbelag wird von der Bindeschicht gehalten. Ein partielles Abscheren des Reibbelages erfolgt nicht.

Die reproduzierbare dünne Bindeschicht gewährleistet eine plane Arbeitsfläche des Reibbelages. Damit liegt der Reibbelag zu 100 %, also vollflächig an einer gegenüberstehenden, anzupressenden Arbeitsfläche an. Beim Kuppel- oder Bremsvorgang ist gewährleistet, daß alle Flächenelemente des Reibbelages gleichzeitig und mit gleicher Flächenpressung die Arbeitsfläche kontaktieren. Ein partielles Überhitzen des Reibbelages ist daher sicher vermieden.

Die Bindeschicht besitzt eine geringe Dichte von δ = ~1,0. In Verbindung von dünner Schichtdicke und geringer Dichte ist die Massenträgheit von Kupplungen und Bremsen vorteilhaft klein.

Die Bindeschicht ist vollflächig oder auch segmentiert ausführbar.

Die hochfeste und temperaturstabile Verbindung von Trägerkörper, Bindeschicht und Reibbelag erfolgte kostengünstig durch Heißvulkanisation bei + 180° C in einem Arbeitsgang. Zuvor sind der Reibbelag und der Trägerkörper jedoch mit einem handelsüblichen Haftmittel zu versehen.
Eine Nachbearbeitung oder eine thermische Nachbehandlung ist nicht erforderlich.
Ein weiterer Vorteil ist die Dauerfestigkeit der vorgenannten Verbindung. Eine Überlastung der Kupplung bzw. Bremse hat keinen Einfluß auf diese Verbindung.

Die Bindeschicht ist vielseitig einsetzbar. Sie verbindet miteinander sowohl gleiche Werkstoffpaarungen als auch unterschiedliche Werkstoffpaarungen, wie Metalle, Kunststoffe, Gläser und heterogene Werkstoffe, wie Reibbeläge und Bremsbeläge.

Zusammenfassend ist die erfindungsgemäße Bindeschicht kostengünstig, kostengünstig zu verarbeiten und verbindet Werkstoffpaarungen sehr fest und reproduzierbar, auch in extremen Temperaturbereichen. Die damit gefertigten Bauteile weisen eine geringe Masse auf und sind in Bezug auf die Bindeschicht frei von statischen und dynamischen Unwuchten. Aufgrund der dünnen Bindeschicht ist auch der erforderliche Wärmetransport vom Reibbelag zum Trägerkörper gegeben. Ein Wärmestau kann nicht auftreten.

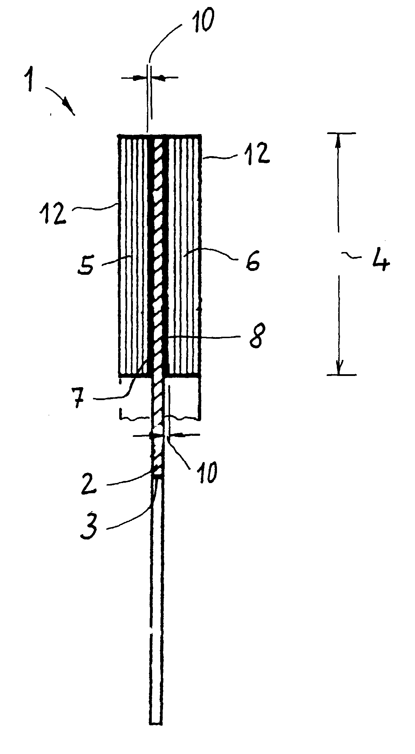

Ein Ausführungsbeispiel der Erfindung ist in der Zeichnung in einer einzigen Figur dargestellt und nachfolgend beschrieben.

Eine Kupplungsscheibe ist im Teilquerschnitt dargestellt. Ein Trägerkörper 2 aus einem Stahlblech weist eine zentrale Bohrung 3 und in einem radialen Abschnitt 4 beidseitig Kupplungsbeläge 5, 6 auf. Diese Kupplungsbeläge 5, 6 sind jeweils über eine Bindeschicht 7, 8 mit dem Trägerkörper 2 fest verbunden.

Die Bindeschichten* 7, 8 sind kreisringförmig entsprechend den Kupplungsbelägen 5, 6. Ihre Schichtdicke* 10 beträgt 0,8 mm bei einer Kupplungsscheibe 1 mit einem Außendurchmesser von 200 mm und einem Innendurchmesser der Kupplungsbeläge 5, 6 von 140 mm sowie einem maximal zu übertragenden Drehmoment von 120 Nm.

Die Kupplungsbeläge 5,6 sind jeweils 1,6 mm dick. Die Dicke des Trägerkörpers 2 beträgt 0,8 mm. Die Bindeschichten 7, 8 bestehen aus einem HTV-Silikon entsprechend der nachgenannten Zusammensetzung sowie den angegebenen physikalischen Parametern:
- Vinylgruppenhaltiges Siloxan* 60 phr
- Dimethylphenyl-Polysiloxan* 40 phr
   * mit einem Molekulargewicht zwischen 300.000 und 700.000
- Verstärkerfüllstoff wie z. B. 65 phr pyrogene Kieselsäure mit einer aktiven Oberfläche von 50-400 m²/g
- Füllstoffaktivatoren 5 phr
- Stabilisatoren z. B. Fe 0 11 phr
- Vernetzer; z. B. Dibenzoylperoxid od.2.4-Dichlorbenzoylperoxid 7,5 phr

- Zugfestigkeit 8 MPa
- Bruchdehnung 670%
- Modul 300% 2,4 MPa
- Weiterreißwiderstand 45,7 kN/m
- Druckverformungsrest 22 h / 125° C 6,4%

Die vorstehenden Bestandteile, nämlich Siloxan und Polysiloxan definieren die Zusammensetzung des Silikonelastomers. Die Kieselsäure ist als Füllstoff maßgebend für die Verbesserung bzw. Modifizierung der mechanischen Eigenschaften, wie Festigkeit und Härte.

Die Füllstoffaktivatoren verbessern die Verstärkerwirkung des Füllstoffes. Die Stabilisatoren sind maßgeblich für die Hitzestabilität der Bindeschichten 7, 8.
Der Vernetzer ist notwendig zur Vulkanisation des Materials, nämlich für die Umwandlung der plastischen Masse in ein elastisches Material. Der Vernetzer beeinflußt ebenfalls die mechanischen Eigenschaften.

Mit der Bindeschicht gemäß dem Ausführungsbeispiel als auch mit der Bindeschicht entsprechend den angegebenen Bereich ist eine Temperaturbeständigkeit von - 40° C bis + 275° C gegeben. Weiterhin werden die eingangs genannten dynamischen Forderungen sowie Langzeit-Standfestigkeit erfüllt.

Die Kupplungsbeläge 5, 6 weisen plane Arbeitsflächen 12 auf.

Neben der beschriebenen Anwendung der erfindungsgemäßen Bindeschicht für Kupplungbeläge ist die Bindeschicht auch für Bremsbeläge und andere dynamisch und temperaturbeanspruchte Beläge einsetzbar.

## Patentansprüche

1. Bindeschicht für Kupplungsbeläge und Bremsbeläge und andere, gegen Wärme und Erschütterungen resistente Beläge auf einem Trägerwerkstoff,
dadurch gekennzeichnet,
daß die Bindeschicht aus einer peroxydisch vernetzten Silikonmischung auf Basis von VMQ = vinylgruppenhaltiger Silikonkautschuk besteht,
mit Kieselsäure als Füllstoff,
wobei das Molekulargewicht des Siloxan zwischen 300.000 und 700.000 liegt.

2. Bindeschicht nach Anspruch 1,
dadurch gekennzeichnet,
daß die Silikonmischung besteht aus:
- Vinylgruppenhaltiges Siloxan* 10.....100 phr
- Dimethylphenyl-Polysiloxan * 10.....100 phr
* mit einem Molekulargewicht zwischen 300.000 und 700.000
pyrogene Kieselsäure mit einer 10....150 phr aktiven Oberfläche von 50-400 m²/g
- Füllstoffaktivatoren 0...10 phr
- Stabilisatoren z. B. Fe 0 1...15 phr
- Vernetzer; Dibenzoylperoxid od.2.4-Dichlorbenzoylperoxid 1...20 phr

3. Bindeschicht nach den Ansprüchen 1 und 2,
dadurch gekennzeichnet,
daß die Silikonmischung aufweist:
- Zugfestigkeit 5....15 MPA
- Bruchdehnung >500%
- Modul 300% > 1,5 MPa
- Weiterreißwiderstand > 40 kN/m
- Druckverformungsrest 22 h / 125° C < 10%

4. Bindeschicht nach den Ansprüchen 1 bis 3,
gekennzeichnet durch folgende Werte:
- Vinylgruppenhaltiges Siloxan * 60 phr
- Dimethylphenyl-Polysiloxan * 40 phr
* mit einem Molekulargewicht zwischen 300.000 und 700.000
pyrogene Kieselsäure mit einer 65 phr aktiven Oberfläche von 50-400 m²/g
- Füllstoffaktivatoren 5 phr
- Stabilisatoren z. B. Fe 0 11 phr
- Vernetzer; Dibenzoylperoxid od.2.4-Dichlorbenzoylperoxid 7,5 phr
- Zugfestigkeit 8 MPa
- Bruchdehnung 670%
- Modul 300% 2,4 MPa
- Weiterreißwiderstand 45,7 KN/m
- Druckverformungsrest 22 h / 125° C 6,4%

## Claims

1. Bonding layer for clutch linings and brake linings and other heat- and vibration-resistant linings on a carrier material,
characterized in that
the bonding layer consists of a peroxide-crosslinked silicone mixture based on VMQ = vinyl-group-containing silicone rubber,
with silicic acid as filling material,
the molecular weight of the siloxane being between 300,000 and 700,000.

2. Bonding layer according to Claim 1,
characterized in that
the silicone mixture consists of:
- vinyl-group-containing siloxane * 10.....100 phr
- dimethylphenyl-polysiloxane * 10....100 phr
* with a molecular weight between 300,000 and 700,000
pyrogenic silicic acid with an 10....150 phr active surface of 50-400 m²/g
- filling material activators 0...10 phr
- stabilizers e.g. Fe O 1...15 phr
- cross-linking agents; dibenzoyl-peroxide or 2.4-dichlorobenzoyl-peroxide 1...20 phr

3. Bonding layer according to Claims 1 and 2,
characterized in that the silicone mixture has:
- resistance to extension 5....15 MPA
- elongation at rupture >500%
- modulus 300% >1.5 MPa
- tear strength >40 kN/m
- permanent set 22 h / 125°C < 10%

4. Bonding layer according to Claims 1 to 3,
characterized by the following values:
- vinyl-group-containing siloxane * 60 phr
- dimethylphenyl polysiloxane * 40 phr
* with a molecular weight between 300,000 and 700,000
pyrogenic silicic acid with an 65 phr active surface of 50-400 m²/g
- filling material activators 5 phr
- stabilizers e.g. Fe 0 11 phr
- cross-linking agents; dibenzoyl-peroxide or 2.4-dichlorobenzoyl-peroxide 7.5 phr
- resistance to extension 8 MPa
- elongation at rupture 670%
- modulus 300% 2.4 MPa
- tear strength 45.7 kN/m
- permanent set 22 h / 125°C 6.4%

## Revendications

1. Couche de liant pour des revêtements d'embrayage et des garnitures et autres, revêtements résistant à la chaleur et aux secousses, appliqués sur un matériau-support, caractérisée en ce que la couche de liant est constituée d'un mélange de silicone réticulé de façon peroxydique, à base de VMQ = caoutchouc au silicone contenant des groupes vinyles,
utilisant de l'acide silicique comme charge, le poids moléculaire du siloxane étant compris entre 300.000 et 700.000.

2. Couche de liant selon la revendication 1, caractérisée en ce que le mélange de silicone est constitué de:
- siloxane comprenant des groupes vinyles⁻ 10 à 100 phr
- polysiloxane de diméthylphényle⁻ 10 à 100 phr
* ayant un poids moléculaire compris entre 300.000 et 700.000
- acide silicique pyrogène ayant une surface 10 à 150 phr active de 50 à 400 m²/g
- activateurs de charge 0 à 10 phr
- stabilisateurs, par exemple FeO 1 à 15 phr
- peroxyde de dibenzoyle ou peroxyde de 2,4-dichlorobenzoyle réticulé 1 à 20 phr

3. Couche de liant selon les revendications 1 et 2, caractérisée en ce que le mélange de silicone présente:
- résistance en traction 5 à 15 MPa
- allongement à la rupture > 500%
- module à 300% > 1,5 MPa
- résistance à la propagation de fissuration > 40 kN/m
- déformation résiduelle sous la pression 22 h / 125°C < 10%

4. Couche de liant selon les revendications 1 à 3, caractérisée par les teneurs ci-après:
- siloxane contenant des groupes vinyles⁻ 60 phr
- polysiloxane de diméthylphényle⁻ 40 phr
* ayant un poids moléculaire compris entre 300.000 et 700.000
- acide silicique pyrogène ayant une surface 65 phr active de 50 à 400 m²/g
- activateurs de charge 5 phr
- stabilisateurs, par exemple Fe0 11 phr
- peroxyde de dibenzoyle ou peroxyde de 2,4-dichlorbenzoyle réticulé 7,5 phr
- résistance en traction 8 MPa
- allongement à la rupture 670%
- module à 300% 2,4 MPa
- résistance à la propagation de fissuration 45,7 kN/m
- déformation résiduelle sous la pression 22 h / 125°C 6,4%
